# EUROPEAN PATENT SPECIFICATION

(11) **EP 4 199 416 B1**
(45) Date of publication and mention of the grant of the patent: **24.06.2026**
(21) Application number: 20949144.8
(22) Date of filing: 14.08.2020
(51) Int. Cl.: H04W 76/11, H04W 76/12, H04W 88/14

(54) **INFORMATION TRANSMISSION METHOD AND APPARATUS, AND COMMUNICATION DEVICE**
INFORMATIONSÜBERTRAGUNGSVERFAHREN UND -VORRICHTUNG SOWIE KOMMUNIKATIONSVORRICHTUNG
PROCÉDÉ ET APPAREIL DE TRANSMISSION D'INFORMATIONS, ET DISPOSITIF DE COMMUNICATION

(43) Date of publication of application: 21.06.2023
(73) Proprietor: Beijing Xiaomi Mobile Software Co., Ltd., Beijing 100085 (CN)
(72) Inventor: HONG, Wei, Beijing 100085 (CN)
(74) Representative: dompatent
(86) International application number: PCT/CN2020/109219
(87) International publication number: WO 2022/032646

(56) References cited:
- EP-B1- 3 935 878
- CN-A- 108 271 229
- CN-A- 109 104 394
- CN-A- 110 913 389
- CN-A- 111 200 848
- CN-A- 111 510 912
- "3rd Generation Partnership Project; Technical Specification Group Services and System Aspects; Study on architectural enhancements for 5G multicast-broadcast services (Release 17)", 22 June 2020 (2020-06-22), XP051903807, Retrieved from the Internet <URL:https://ftp.3gpp.org/tsg_sa/WG2_Arch/Latest_SA2_Specs/Latest_draft_S2_Specs/23757-040.zip 23757-040_MCCclean.docx> [retrieved on 20200622]

## Description

### TECHNICAL FIELD

The present disclosure relates to, but is not limited to, a field of wireless communication technologies, and more particularly to methods for information transmission, and a communication device.

### BACKGROUND

Smart interaction is an important application scenario for next-generation mobile communication, such as the sixth generation (6G, 6^{th} Generation). The smart interaction is intelligent interaction between agents (including people and intelligent devices). Most of the existing interaction between agents are passive, relying on an input of a demand, such as voice and visual interaction between people and smart homes, and the input is unimodal. In the 6G era, multimodal interaction will become a normal state. The multimodal interaction may send inputs of more than one device or more than one input of one device to a centralized processing device or function, and comprehensively process these multimodal inputs to finally obtain one or more outputs satisfying a demand of a user. More than one output may also be performed multi-output by more than one device or one device.

Presently, a cellular mobile communication network, including an access network and a core network, do not support a multimodal interaction function.

3GPP TR 23.757 v0.4.0 "3rd Generation Partnership Project; Technical Specification Group Services and System Aspects; Study on architectural enhancements for 5G multicast-broadcast services (Release 17)" provides a study on multicast and broadcast communication services sessions establishment and maintenance.

EP3935878B1 which represents the prior art according to Article 54(3) EPC, discloses an access and mobility management function (AMF) of a first public land mobile network (PLMN) receives status information from a first network function. The status information comprises a network disaster indication and an identifier of the second PLMN. The network disaster indication indicates a failure of a second PLMN in a coverage area. Based on the status information, the AMF determines at least one base station of the first PLMN. The AMF sends a configuration message to the at least one base station. The configuration message comprises the status information.

### SUMMARY

In view of this, embodiments of the present disclosure disclose methods for information transmission, and a communication device

The invention is defined by the independent claims. Further advantageous embodiments are defined in the dependent claims.

According to a first aspect of embodiments of the present disclosure, there is provided a method for information transmission as defined in claim 1, applicable for an access and mobility management function (AMF) of a core network.

According to a second aspect of embodiments of the present disclosure, there is provided a method for information transmission as defined in claim 7, applicable for a session management function (SMF) of a core network.

According to a third aspect of embodiments of the present disclosure, there is provided a method for information transmission as defined in claim 11, applicable for a user equipment (UE).

According to another aspect of embodiments of the present disclosure, there is provided a communication device as defined in claim 15.

According to the methods for information transmission, and the communication device provided by embodiments of the present disclosure, the access and mobility management function (AMF) of the core network receives the protocol data unit (PDU) session establishment request sent by the user equipment (UE) for the multimodal service. The PDU session establishment request carries the multimodal service identifier information. Therefore, the PDU session establishment request carries the multimodal service identifier information, which may, on the one hand, implicitly indicate a type of PDU session requested to establish, namely, a PDU session for multimodal service, on the other hand, be configured to indicate a type of multimodal service, etc., providing necessary information for establishment of the PDU session, and improving efficiency of information indication.

It should be noted that, the details above and in the following are exemplary and illustrative, and do not constitute the limitation on the present disclosure. The limitation of the present disclosure is provided by the scope of the claims.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a flowchart illustrating a method for information transmission according to an illustrative embodiment of the present disclosure.
FIG. 2 is a flowchart illustrating another method for information transmission according to an illustrative embodiment of the present disclosure.
FIG. 3 is a flowchart illustrating yet another method for information transmission according to an illustrative embodiment of the present disclosure.
FIG. 4 is a flowchart illustrating still another method for information transmission according to an illustrative embodiment of the present disclosure.
FIG. 5 is a block diagram illustrating an apparatus for information transmission according to an illustrative embodiment of the present disclosure.
FIG. 6 is a block diagram illustrating another apparatus for information transmission according to an illustrative embodiment of the present disclosure.
FIG. 7 is a block diagram illustrating yet another apparatus for information transmission according to an illustrative embodiment of the present disclosure.
FIG. 8 is a block diagram illustrating an apparatus configured for information transmission according to an illustrative embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the present disclosure are only for the purpose of describing specific embodiments, and are not intended to limit the present disclosure. The singular forms "a", "said" and "the" used in the present disclosure and attached claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used in the present disclosure to describe various types of information, the information should not be limited to these terms. These terms are only used to distinguish the same type of information from each other. For example, without departing from the scope of the present disclosure, first information may also be referred to as second information, and similarly, the second information may also be referred to as the first information. Depending on the context, for example, the word "if" as used herein may be interpreted as "when" or "upon" or "in response to determining".

The execution subject involved in embodiments of the present disclosure may include, but be not limited to, access network devices, such as base stations, and core network devices, etc., which support cellular mobile communication.

An application scenario of embodiments of the present disclosure is that, in related arts, the cellular mobile communication network does not yet support to establish a PDU sessions for multimodal communication or services.

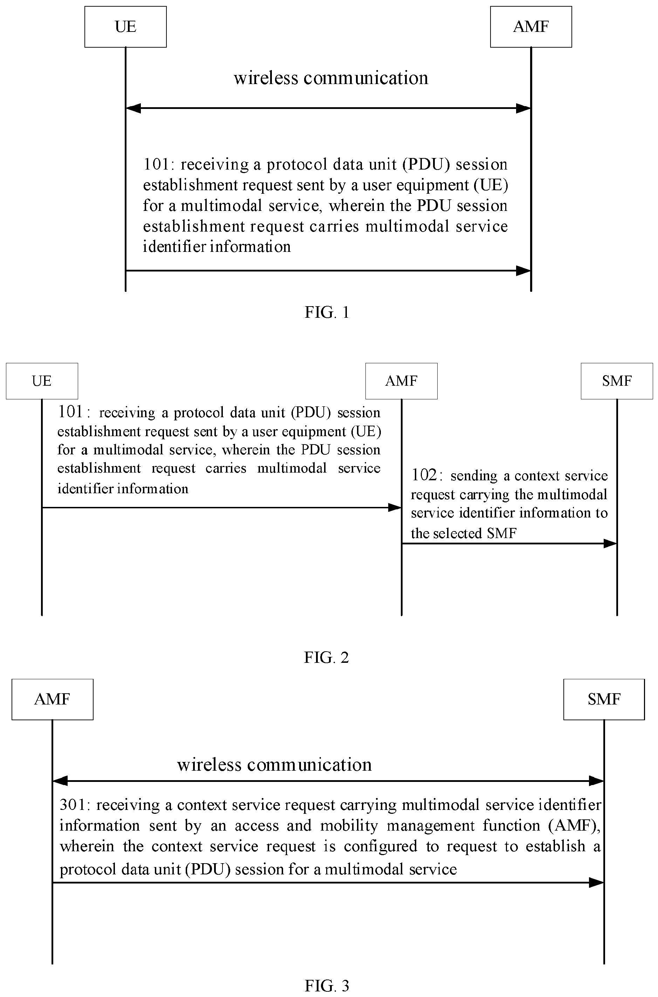

A method of information transmission, applicable for an access and mobility management function (AMF) of a core network is provided in accordance with the present invention. As illustrated in FIG. 1, the method for information transmission includes the following step.

At step S101, a protocol data unit (PDU) session establishment request sent by a user equipment (UE) for a multimodal service is received. The PDU session establishment request carries multimodal service identifier information.

A PDU session for the multimodal service may transmit data of one modal through more than one transmission connection respectively. A source or a form of different data is called one modal. Input modals may be distinguished based on media of data, for example, voice, video, characters, etc. respectively may be called as one modal. Alternatively and not according to the present invention, modals may be distinguished based on different acquisition ways of input data. For example, data acquired from a sensor, a radar, an infrared element and an accelerometer respectively may be referred to as data of one modal. The multimodal service may include: multimodal communication and service, etc.

Multimodal data acquired through am image sensor, an audio sensor, etc. may be sent by the user equipment UE, such as a mobile terminal and an Internet of Things terminal, in a cellular mobile communication network.

The UE sends the PDU session establishment request for the multimodal service to the core network, and requests to establish a PDU session for the multimodal service. Data of different modal may be transmitted through different transmission connections.

The UE may forward the PDU session establishment request to the core network through an access network (RAN). The AMF in the core network may receive the PDU session establishment request. The AMF is configured to manage access authority and handover of the UE.

The multimodal service identifier information may be configured to identify a service of the PDU session requested, as well as a type and a name, etc., of the multimodal service corresponding to the PDU session requested. The core network may determine configuration and resources, etc., required by the PDU session based on the multimodal service identifier information, and then establish the PDU session suitable for the multimodal service. The PDU session establishment request may carry a PDU session ID, a data network name (DNN) and a request type, etc. The request type may indicate whether the PDU session establishment request is an initial request or an existing session, etc.

In this way, the PDU session establishment request carries the multimodal session identifier information, which may, on the one hand, implicitly indicate a type of PDU session requested to establish, namely, a PDU session for multimodal service, on the other hand, be configured to indicate a type of multimodal service, etc., providing necessary information for establishment of the PDU session, and improving efficiency of information indication.

In an embodiment, receiving the PDU session establishment request transmitted sent by the UE for the multimodal service includes:
receiving PDU Session establishment request signaling carrying the multimodal service identifier information sent by the UE.

The multimodal session identifier information of the PDU session establishment request may be added to the PDU session establishment request signaling and sent to the AMF by the UE.

The multimodal session identifier information may be carried through reserved bits in the PDU session establishment request signaling. In this way, use efficiency of the PDU session establishment request signaling may be improved.

According to the present invention, the method further includes: selecting a session management function (SMF) associated with the multimodal service in response to receiving the PDU session establishment request.

As illustrated in FIG. 2, the method further includes the following step.

At step S102, a context service request carrying the multimodal service identifier information is sent to the selected SMF.

The SMF is a functional unit based on service architecture. The SMF is mainly responsible for interacting with separated data planes, creating, updating and deleting a PDU session, and managing a session environment with a user plane function (UPF).

The AMF selects a SMF that serves for the UE requesting to establish the PDU session, and requests the SMF to create a service for PDU session context. The AMF carries the multimodal service identifier information in the context service request, and the multimodal service identifier information is configured to indicate for the SMF a service corresponding to the PDU session requested to establish.

There are three purposes for sending the context service request, including establishing a session association between the AMF and the SMF on UE; transmitting subscription data containing the UE and triggering a whole session establishment process. The request may include a subscription permanent identifier (SUPI), a PDU session ID, and a PDU session request, etc., that is, subscription data obtained by the AMF and a session establishment message from the UE to the SMF.

After receiving the context service request, the SMF may determine whether to establish the PDU session for the multimodal service with respect to multimodal service identifier information.

In an embodiment, the AMF may further check whether it is acceptable to establish a PDU session supporting the multimodal service for a multimodal UE after receiving the PDU session establishment request carrying the multimodal service identifier information. In response to determining that it is acceptable to establish the PDU session supporting the multimodal service for the multimodal UE, the AMF sends the context service request carrying the multimodal service identifier information to the SMF.

In an embodiment, sending the context service request carrying the multimodal service identifier information to the selected SMF includes one of:
sending Nsmf_PDUSession_CreateSMContext Request signaling carrying the multimodal service identifier information to the selected SMF; or
sending Nsmf_PDUSession _UpdateSMContext Request signaling carrying the multimodal service identifier information to the selected SMF.

In a case that the AMF is not associated with a SMF corresponding to a PDU session ID provided by the UE, for example, when a request type indicates "Initial Request", the AMF sends the Nsmf_ PDUSession_ CreateSMContext Request signaling.

In a case that the AMF has been associated with the SMF corresponding to the PDU session ID provided by the UE, for example, when the request type indicates "existing PDU session", the AMF sends the Nsmf_ PDUSession_ UpdateSMContext Request signaling.

Reserved bits and others in the Nsmf_ PDUSession_ CreateSMContext Request signaling and the Nsmf_ PDUSession_ UpdateSMContext Request signaling may be used to carry the multimodal service identifier information. In this way, usage efficiency of the Nsmf_ PDUSession_ CreateSMContext Request signaling and the Nsmf_ PDUSession_UpdateSMContext Request signaling may be improved.

In an embodiment, the method further includes one of:
determining that the selected SMF agrees to establish a PDU session in response to receiving a context service response carrying the multimodal service identifier information sent by the selected SMF; or
determining that the selected SMF disagrees to establish a PDU session in response to receiving a PDU session rejection instruction carrying the multimodal service identifier information sent by the selected SMF.

When the SMF receives the Nsmf_PDUSession_CreateSMContext Request signaling or the Nsmf_PDUSession_UpdateSMContext Request signaling, and the SMF is capable of processing the PDU session establishment request, the SMF creates the PDU session context and responds to the AMF by sending the context service response, indicating that the SMF agrees to establish the PDU session corresponding to the multimodal service identifier information. Otherwise, the SMF indicates that the SMF disagrees to establish the PDU session corresponding to the multimodal service identifier information through the rejection instruction.

In an embodiment, determining that the selected SMF agrees to establish the PDU session in response to receiving the context service response carrying the multimodal service identifier information sent by the selected SMF includes one of:
determining that the selected SMF agrees to establish the PDU session in response to receiving Nsmf_PDUSession_CreateSMContext Response signaling carrying the multimodal service identifier information sent by the selected SMF; or
determining that the selected SMF agrees to establish the PDU session in response to receiving Nsmf_PDUSession_UpdateSMContext Response signaling carrying the multimodal service identifier information sent by the selected SMF.

For the Nsmf_PDUSession_CreateSMContext Request signaling sent by the AMF, in response to the SMF agreeing to establish the PDU session corresponding to the multimodal service identifier information, the SMF may respond through the Nsmf_PDUSession_CreateSMContext Response signaling carrying the multimodal service identifier information.

For the Nsmf_PDUSession_UpdateSMContext Request signaling sent by the AMF, in response to the SMF agreeing to establish the PDU session corresponding to the multimodal service identifier information, the SMF may respond through the Nsmf_PDUSession_UpdateSMContext Response signaling.

In an embodiment, determining that the selected SMF disagrees to establish the PDU session in response to receiving the PDU session rejection instruction carrying the multimodal service identifier information sent by the selected SMF includes:
determining that the selected SMF disagrees to establish the PDU session in response to receiving PDU session reject signaling carrying the multimodal service identifier information sent by the selected SMF.

For the Nsmf_PDUSession_CreateSMContext Request signaling or the Nsmf_PDUSession_UpdateSMContext Request signaling sent by the AMF, in response to the SMF disagreeing to establish the PDU session corresponding to the multimodal service identifier information, the SMF may respond through the PDU session reject signaling carrying the multimodal service identifier information.

In an embodiment, the method further includes:
receiving session management information of the PDU session, in which the session management information is sent by the selected SMF in response to successfully establishing the PDU session.

The SMF may select an appropriate user plane function (UPF) to establish the PDU session in response to agreeing to establish the PDU session corresponding to the multimodal business ID information.

The UPF is a user plane network element. Based on a forwarding rule issued by the SMF, the UPF may forwards a response and acts as a gateway between a user plane and a data network (DN).

After completing establishment of the PDU session, the SMF may forward relevant session management (SM) information of the PDU session to the UE and the base station through the AMF. The session management information may include, but not limited to, a PDU session ID, N2 SM information, a N1 SM container, etc.

In an embodiment, receiving the session management information of the PDU session sent by the selected SMF in response to successfully establishing the PDU session includes:
receiving Namf_Communication_N1N2MessageTransfer signaling carrying the session management information of the PDU session sent by the selected SMF.

Reserved bits and others in the Namf_Communication_N1N2MessageTransfer signaling may carry the session management information of the PDU session corresponding to the multimodal service identifier information, which may improve use efficiency of the Namf_Communication _N1N2MessageTransfer signaling.

In an embodiment, the method further includes:
sending the session management information of the PDU session to an access network, in response to receiving the session management information of the PDU session; in which, the access network sends the session management information of the PDU session to the UE.

After receiving the session management information of the PDU session corresponding to the multimodal service identifier information, the AMF may send the session management information to the access network. The access network may obtain N2 session management information for this PDU session. The access network may send the session management information to the UE.

In an embodiment, sending the session management information of the PDU session to the access network in response to receiving the session management information of the PDU session includes:
sending N2 PDU Session Request signaling carrying the session management information of the PDU session to the access network.

The AMF may use Reserved bits and others in the N2 PDU Session Request signaling to carry the session management information of PDU sessions corresponding to the multimodal service identifier information. In this way, use efficiency of the N2 PDU Session Request signaling may be improved.

In an embodiment, the access network sends the session management information of the PDU session to the UE by carrying the session management information of the PDU session in RRC Connection Reconfiguration signaling.

After receiving the session management information of the PDU session corresponding to the multimodal service identifier information, the access network may carry the session management information in the RRC Connection Reconfiguration signaling and send the signaling to the UE. The UE obtains the session management information by parsing the RRC Connection Reconfiguration signaling, and then performs transmission of the multimodal service.

In an embodiment, different types of multimodal services correspond to different multimodal service identifier information.

Different types of multimodal services have different requirements for the number of required transmission connections and PDU sessions. Therefore, different multimodal service identifier information may be configured to identify different types of multimodal services.

In this way, PDU sessions established based on different multimodal service identifier information may meet requirements of different multimodal services.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

Here, a name corresponding to the type of the multimodal service may be configured to identify the type of the multimodal service. Different predefined identifiers may also be configured to indicate different types of multimodal services. A set of different types of multimodal services may be defined by predefined listing different enumeration values. Different types of multimodal services may be indicated through enumeration values corresponding to the types of multimodal services. Different types of multimodal services may be indicated by different characters and/or strings.

In an embodiment, a correspondence relationship between types of multimodal services and multimodal service identifier information is configured by the core network or pre-negotiated.

The correspondence relationship between types of multimodal services and multimodal service identifier information may be pre-negotiated through communication protocols, etc., or configured by the core network.

The correspondence relationship may be broadcast by the base station through a system message, etc. When the UE accesses the base station, the UE may determine the correspondence relationship between types of multimodal services and multimodal service identifier information by receiving the system message, etc. When the UE is to be established the PDU session for the multimodal service, the UE may determine the multimodal service identifier information based on the correspondence relationship.

A method of information transmission, applicable for a session management function (SMF) of a core network, is provided in accordance with the present invention. As illustrated in FIG. 3, the method for information transmission includes the following step.

At step 301, a context service request carrying multimodal service identifier information sent by an access and mobility management function (AMF) is received. The context service request is configured to request to establish a protocol data unit (PDU) session for a multimodal service.

A PDU session for the multimodal service may transmit data of one modal through more than one transmission connection respectively. A source or a form of different data is called one modal. Input modals may be distinguished based on media of data, for example, voice, video, characters, etc. respectively may be called as one modal. Alternatively and not according to the present invention, modals may be distinguished based on different acquisition ways of input data. For example, data acquired from a sensor, a radar, an infrared element and an accelerometer respectively may be referred to as data of one modal. The multimodal service may include: multimodal communication and service, etc.

Multimodal data acquired through am image sensor, an audio sensor, etc. may be sent by the user equipment UE, such as a mobile terminal and an Internet of Things terminal, in a cellular mobile communication network.

The UE sends the PDU session establishment request for the multimodal service to the core network, and requests to establish a PDU session for the multimodal service. Data of different modal may be transmitted through different transmission connections.

The UE may forward the PDU session establishment request to the core network through an access network (RAN). The AMF in the core network may receive the PDU session establishment request. The AMF is configured to manage access authority and handover of the UE.

The multimodal service identifier information may be configured to identify a service of the PDU session requested, as well as a type and a name, etc., of the multimodal service corresponding to the PDU session requested. The core network may determine configuration and resources, etc., required by the PDU session based on the multimodal service identifier information, and then establish the PDU session suitable for the multimodal service. The PDU session establishment request may carry a PDU session ID, a data network name (DNN) and a request type, etc. The request type may indicate whether the PDU session establishment request is an initial request or an existing session, etc.

In this way, the PDU session establishment request carries the multimodal session identifier information, which may, on the one hand, implicitly indicate a type of PDU session requested to establish, namely, a PDU session for multimodal service, on the other hand, be configured to indicate a type of multimodal service, etc., providing necessary information for establishment of the PDU session, and improving efficiency of information indication.

The SMF is a functional unit based on service architecture. The SMF is mainly responsible for interacting with separated data planes, creating, updating and deleting a PDU session, and managing a session environment with a user plane function (UPF).

The AMF selects a SMF that serves for the UE requesting to establish the PDU session, and requests the SMF to create a service for PDU session context. The AMF carries the multimodal service identifier information in the context service request, and the multimodal service identifier information is configured to indicate for the SMF a service corresponding to the PDU session requested to establish.

There are three purposes for sending the context service request, including establishing a session association between the AMF and the SMF on UE; transmitting subscription data containing the UE and triggering a whole session establishment process. The request may include a subscription permanent identifier (SUPI), a PDU session ID, and a PDU session request, etc., that is, subscription data obtained by the AMF and a session establishment message from the UE to the SMF.

After receiving the context service request, the SMF may determine whether to establish the PDU session for the multimodal service with respect to multimodal service identifier information.

In an embodiment, the AMF may further check whether it is acceptable to establish a PDU session supporting the multimodal service for a multimodal UE after receiving the PDU session establishment request carrying the multimodal service identifier information. In response to determining that it is acceptable to establish the PDU session supporting the multimodal service for the multimodal UE, the AMF sends the context service request carrying the multimodal service identifier information to the SMF.

In an embodiment, receiving the context service request carrying the multimodal service identifier information sent by the AMF includes one of:
receiving Nsmf_PDUSession_CreateSMContext Request signaling carrying the multimodal service identifier information;
receiving Nsmf_PDUSession_UpdateSMContext Request signaling carrying the multimodal service identifier information.

In a case that the AMF is not associated with a SMF corresponding to a PDU session ID provided by the UE, for example, when a request type indicates "Initial Request", the AMF sends the Nsmf_ PDUSession_ CreateSMContext Request signaling.

In a case that the AMF has been associated with the SMF corresponding to the PDU session ID provided by the UE, for example, when the request type indicates "existing PDU session", the AMF sends the Nsmf_ PDUSession_ UpdateSMContext Request signaling.

Reserved bits and others in the Nsmf_ PDUSession_ CreateSMContext Request signaling and the Nsmf_ PDUSession_ UpdateSMContext Request signaling may be used to carry the multimodal service identifier information. In this way, usage efficiency of the Nsmf_ PDUSession_ CreateSMContext Request signaling and the Nsmf_ PDUSession_ UpdateSMContext Request signaling may be improved.

In an embodiment, the method further includes:
sending a context service response carrying the multimodal service identifier information to the AMF, in response to agreeing to establish the PDU session; or
sending a PDU session rejection instruction carrying the multimodal service identifier information to the AMF, in response to disagreeing to establish the PDU session.

When the SMF receives the Nsmf_PDUSession_CreateSMContext Request signaling or the Nsmf_PDUSession_UpdateSMContext Request signaling, and the SMF is capable of processing the PDU session establishment request, the SMF creates the PDU session context and responds to the AMF by sending the context service response, indicating that the SMF agrees to establish the PDU session corresponding to the multimodal service identifier information. Otherwise, the SMF indicates that the SMF disagrees to establish the PDU session corresponding to the multimodal service identifier information through the rejection instruction.

In an embodiment, sending to the AMF the context service response carrying the multimodal service identifier information includes one of:
sending Nsmf_PDUSession_CreateSMContext Response signaling carrying the multimodal service identifier information to the AMF; or
sending Nsmf_PDUSession_UpdateSMContext Response signaling carrying the multimodal service identifier information to the AMF.

For the Nsmf_PDUSession_CreateSMContext Request signaling sent by the AMF, in response to the SMF agreeing to establish the PDU session corresponding to the multimodal service identifier information, the SMF may respond through the Nsmf_PDUSession_CreateSMContext Response signaling carrying the multimodal service identifier information.

For the Nsmf_PDUSession_UpdateSMContext Request signaling sent by the AMF, in response to the SMF agreeing to establish the PDU session corresponding to the multimodal service identifier information, the SMF may respond through the Nsmf_PDUSession_UpdateSMContext Response signaling.

In an embodiment, sending the PDU session rejection instruction carrying the multimodal service identifier information to the AMF includes:
sending PDU session reject signaling carrying the multimodal service identifier information to the AMF.

For the Nsmf_PDUSession_CreateSMContext Request signaling or the Nsmf_PDUSession_UpdateSMContext Request signaling sent by the AMF, in response to the SMF disagreeing to establish the PDU session corresponding to the multimodal service identifier information, the SMF may respond through the PDU session reject signaling carrying the multimodal service identifier information.

In an embodiment, the method further includes:
selecting a user plane function (UPF) associated with the multimodal service, in response to agreeing to establish the PDU session.

The SMF may select an appropriate user plane function (UPF) to establish the PDU session in response to agreeing to establish the PDU session corresponding to the multimodal business ID information.

The UPF is a user plane network element. Based on a forwarding rule issued by the SMF, the UPF may forwards a response and acts as a gateway between a user plane and a data network (DN).

In an embodiment, the method further includes:
sending session management information of the PDU session to the AMF, in response to successfully establishing the PDU session.

After completing establishment of the PDU session, the SMF may forward relevant session management (SM) information of the PDU session to the UE and the base station through the AMF. The session management information may include, but not limited to, a PDU session ID, N2 SM information, a N1 SM container, etc.

In an embodiment, sending the session management information of the PDU session to the AMF includes:
sending Namf_Communication_N1N2MessageTransfer signaling carrying the session management information of the PDU session to the AMF.

Reserved bits and others in the Namf_Communication_N1N2MessageTransfer signaling may carry the session management information of the PDU session corresponding to the multimodal service identifier information, which may improve use efficiency of the Namf_Communication _N1N2MessageTransfer signaling.

In an embodiment, different types of multimodal services correspond to different multimodal service identifier information.

Different types of multimodal services have different requirements for the number of required transmission connections and PDU sessions. Therefore, different multimodal service identifier information may be configured to identify different types of multimodal services.

In this way, PDU sessions established based on different multimodal service identifier information may meet requirements of different multimodal services.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

Here, a name corresponding to the type of the multimodal service may be configured to identify the type of the multimodal service. Different predefined identifiers may also be configured to indicate different types of multimodal services. A set of different types of multimodal services may be defined by predefined listing different enumeration values. Different types of multimodal services may be indicated through enumeration values corresponding to the types of multimodal services. Different types of multimodal services may be indicated by different characters and/or strings.

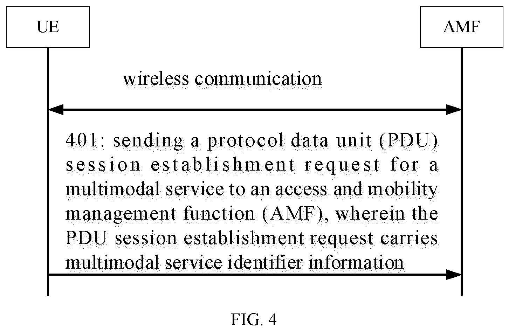

A method for information transmission, applicable for a user equipment (UE) of a core network, is provided in an embodiment. As illustrated in FIG. 4, the method for information transmission includes the following step.

At step 401, a protocol data unit (PDU) session establishment request for a multimodal service is sent to an access and mobility management function (AMF). The PDU session establishment request carries multimodal service identifier information.

A PDU session for the multimodal service may transmit data of one modal through more than one transmission connection respectively. A source or a form of different data may be called one modal. Input modals may be distinguished based on media of data, for example, voice, video, characters, etc. respectively may be called as one modal. Alternatively, modals may be distinguished based on different acquisition ways of input data. For example, data acquired from a sensor, a radar, an infrared element and an accelerometer respectively may be referred to as data of one modal. The multimodal service may include: multimodal communication and service, etc.

Multimodal data acquired through am image sensor, an audio sensor, etc. may be sent by the user equipment UE, such as a mobile terminal and an Internet of Things terminal, in a cellular mobile communication network.

The UE may send the PDU session establishment request for the multimodal service to the core network, and request to establish a PDU session for the multimodal service. Data of different modal may be transmitted through different transmission connections.

The UE may forward the PDU session establishment request to the core network through an access network (RAN). The AMF in the core network may receive the PDU session establishment request. The AMF is configured to manage access authority and handover of the UE.

The multimodal service identifier information may be configured to identify a service of the PDU session requested, as well as a type and a name, etc., of the multimodal service corresponding to the PDU session requested. The core network may determine configuration and resources, etc., required by the PDU session based on the multimodal service identifier information, and then establish the PDU session suitable for the multimodal service. The PDU session establishment request may carry a PDU session ID, a data network name (DNN) and a request type, etc. The request type may indicate whether the PDU session establishment request is an initial request or an existing session, etc.

In this way, the PDU session establishment request carries the multimodal session identifier information, which may, on the one hand, implicitly indicate a type of PDU session requested to establish, namely, a PDU session for multimodal service, on the other hand, be configured to indicate a type of multimodal service, etc., providing necessary information for establishment of the PDU session, and improving efficiency of information indication.

In an embodiment, sending the PDU session establishment request for the multimodal service to the AMF includes:
sending PDU Session establishment request signaling carrying the multimodal service identifier information.

The multimodal session identifier information of the PDU session establishment request may be added to the PDU session establishment request signaling and sent to the AMF by the UE.

The multimodal session identifier information may be carried through reserved bits in the PDU session establishment request signaling. In this way, use efficiency of the PDU session establishment request signaling may be improved.

In an embodiment, the method further includes: receiving session management information of the PDU session sent by an access network, and performing the PDU session based on the session management information.

After receiving the session management information of the PDU session corresponding to the multimodal service identifier information, the AMF may send the session management information to the access network. The access network may obtain N2 session management information for this PDU session. The access network may send the session management information to the UE.

In an embodiment, receiving the session management information of the PDU session sent by the access network includes:
receiving RRC Connection Reconfiguration signaling carrying the session management information of the PDU session sent by the access network.

After receiving the session management information of the PDU session corresponding to the multimodal service identifier information, the access network may carry the session management information in the RRC Connection Reconfiguration signaling and send the signaling to the UE. The UE obtains the session management information by parsing the RRC Connection Reconfiguration signaling, and then performs transmission of the multimodal service.

In an embodiment, different types of multimodal services correspond to different multimodal service identifier information.

Different types of multimodal services have different requirements for the number of required transmission connections and PDU sessions. Therefore, different multimodal service identifier information may be configured to identify different types of multimodal services.

In this way, PDU sessions established based on different multimodal service identifier information may meet requirements of different multimodal services.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

Here, a name corresponding to the type of the multimodal service may be configured to identify the type of the multimodal service. Different predefined identifiers may also be configured to indicate different types of multimodal services. A set of different types of multimodal services may be defined by predefined listing different enumeration values. Different types of multimodal services may be indicated through enumeration values corresponding to the types of multimodal services. Different types of multimodal services may be indicated by different characters and/or strings.

In an embodiment, a correspondence relationship between types of multimodal services and multimodal service identifier information is configured by the core network or pre-negotiated.

The correspondence relationship between types of multimodal services and multimodal service identifier information may be pre-negotiated through communication protocols, etc., or configured by the core network.

In an embodiment, the method further includes:
receiving indication information of a correspondence relationship between types of multimodal services and multimodal service identifier information, in which the indication information is broadcast by a base station.

The correspondence relationship may be broadcast by the base station through a system message, etc. When the UE accesses the base station, the UE may determine the correspondence relationship between types of multimodal services and multimodal service identifier information by receiving the system message, etc. When the UE is to be established the PDU session for the multimodal service, the UE may determine the multimodal service identifier information based on the correspondence relationship.

A specific example in combination with any of the above embodiments is provided below.

This example proposes a method for establishing multimodal communication.
1. When establishing a PDU session, a multimodal UE sends multimodal communication or service information corresponding to a current PDU session establishment request to a core network.
   1. The multimodal communication or service information corresponding to the current PDU session establishment request may be added to PDU session establishment request signaling and sent by a UE to an AMF.
   2. The information may be identified by specific a multimodal communication or service name.
   3. This information may represent different multimodal communication/service types by different integer ID values or different enumeration values or characters/strings.
      a) A correspondence relationship may be broadcast by a base station.
      b) The correspondence relationship may also be configured by the core network.
      c) A default correspondence relationship may be defined.
2. After receiving the PDU establishment request carrying the corresponding multimodal communication or service information, the AMF may select an appropriate SMF for the multimodal terminal according to the information.
   1. After receiving the PDU establishment request carrying the corresponding multimodal communication or service information, the AMF may also check whether it is acceptable to establish the PDU session supporting the multimodal communication or service for the multimodal terminal.
3. After selecting the SMF, the AMF sends the Nsmf_PDUSession_CreateSMContext Request signaling or Nsmf_PDUSession_UpdateSMContext Request carrying the corresponding multimodal communication or service information to the SMF.
4. The SMF receives the Nsmf_PDUSession_CreateSMContext Request signaling or the Nsmf_PDUSession_UpdateSMContext Request signaling carrying the corresponding multimodal communication or service information sent by the AMF, and then decide whether it is acceptable to establish the PDU session for this multimodal communication or service.
   1. In response to agreeing to establish, the SMF replies the Nsmf_PDUSession_CreateSMContext Response signaling or the Nsmf_PDUSession_UpdateSMContext Response carrying agreed multimodal communication or service information.
   2. In response to disagreeing to establish, the SMF replies to PDU Session Reject (Cause) signaling carrying disagreed multimodal communication or service information.
5. In response to agreeing to establish the PDU session, the SMF may select an appropriate UPF.
6. After the PDU session is successfully established, the SMF sends Namf_Communication_N1N2MessageTransfer signaling carrying the PDU session information established for the multimodal communication or service to AMF.
7. After receiving the signaling, the AMF sends N2 PDU Session Request signaling carrying the PDU session information established for the multimodal communication or service to a RAN.
8. After the RAN receives the signaling sent by AMF, the RAN make the UE send RRC Connection Reconfiguration signaling carrying the PDU session information established for the multimodal communication or service.

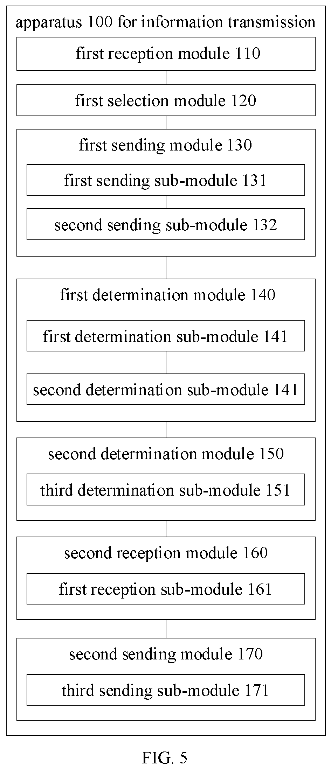

Embodiments of the present application provides an apparatus for information transmission, applicable for a session management function (SMF) of a core network. FIG. 5 is a block diagram illustrating an apparatus 100 for information transmission according to an embodiment of the present disclosure. As illustrated in FIG. 5, the apparatus 100 includes a first reception module 110.

The first reception module 110 is configured to receive a protocol data unit (PDU) session establishment request sent by a user equipment (UE) for a multimodal service, in which the PDU session establishment request carries multimodal service identifier information.

In an embodiment, the first reception module 110 includes:
a first reception sub-module 111, configured to receive PDU Session establishment request signaling carrying the multimodal service identifier information sent by the UE.

In an embodiment, the apparatus 100 further includes:
a first selection module 120, configured to select a session management function (SMF) associated with the multimodal service in response to receiving the PDU session establishment request;
the apparatus 100 further includes:
a first sending module 130, configured to send a context service request carrying the multimodal service identifier information to the selected SMF.

In an embodiment, the first transmission module 130 includes one of
a first sending sub-module 131, configured to send Nsmf_PDUSession_CreateSMContext Request signaling carrying the multimodal service identifier information to the selected SMF; or
a second sending sub-module 132, configured to send Nsmf_PDUSession_UpdateSMContext Request signaling carrying the multimodal service identifier information to the selected SMF.

In an embodiment, the apparatus 100 further includes one of:
a first determination module 140, configured to determine that the selected SMF agrees to establish a PDU session, in response to receiving a context service response carrying the multimodal service identifier information sent by the selected SMF; or
a second determination module 150, configured to determine that the selected SMF disagrees to establish a PDU session, in response to receiving a PDU session rejection instruction carrying the multimodal service identifier information sent by the selected SMF.

In an embodiment, the first determination module 140 includes one of:
a first determination sub-module 141, configured to determine that the selected SMF agrees to establish the PDU session, in response to receiving Nsmf_PDUSession_CreateSMContext Response signaling carrying the multimodal service identifier information sent by the selected SMF; or
a second determination sub-module 142, configured to determine that the selected SMF agrees to establish the PDU session, in response to receiving Nsmf_PDUSession_UpdateSMContext Response signaling carrying the multimodal service identifier information sent by the selected SMF.

In an embodiment, the second determination module 150 includes:
a third determination sub-module 151, configured to determine that the selected SMF disagrees to establish the PDU session, in response to receiving PDU session reject signaling carrying the multimodal service identifier information sent by the selected SMF.

In an embodiment, the apparatus 100 further includes:
a second reception module 160, configured to receive session management information of the PDU session, in which the session management information is sent by the selected SMF in response to successfully establishing the PDU session.

In an embodiment, the second reception module 160 includes:
a first reception sub-module 161, configured to receive Namf_Communication_N1N2MessageTransfer signaling carrying the session management information of the PDU session sent by the selected SMF.

In an embodiment, the apparatus 100 further includes:
a second sending module 170, configured to send the session management information of the PDU session to an access network, in response to receiving the session management information of the PDU session; in which, the access network sends the session management information of the PDU session to the UE.

In an embodiment, the second sending module 170 includes:
a third sending sub-module 171, configured send N2 PDU Session Request signaling carrying the session management information of the PDU session to the access network.

In an embodiment, the access network sends the session management information of the PDU session to the UE by carrying the session management information of the PDU session in RRC Connection Reconfiguration signaling.

In an embodiment, different types of multimodal services correspond to different multimodal service identifier information.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

In an embodiment, a correspondence relationship between types of multimodal services and multimodal service identifier information is configured by the core network or pre-negotiated.

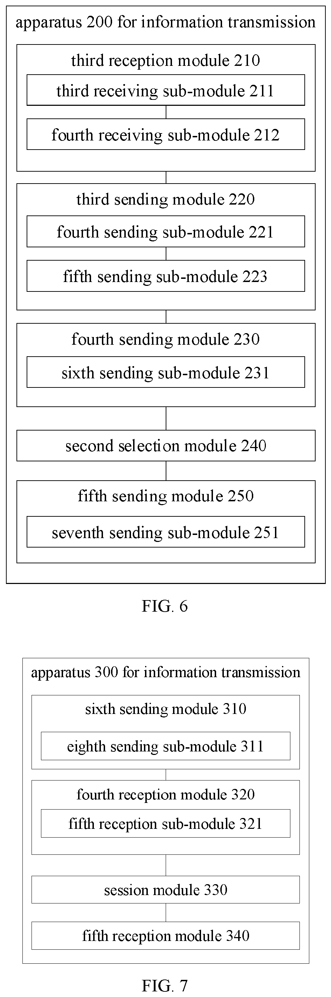

Embodiments of the present application provides an apparatus for information transmission, applicable for a session management function (SMF) of a core network. FIG. 6 is a block diagram illustrating an apparatus 200 for information transmission according to an embodiment of the present disclosure. As illustrated in FIG. 6, the apparatus 200 includes a third reception module 210.

The third reception module 210 is configured to receive a context service request carrying multimodal service identifier information sent by an access and mobility management function (AMF), in which the context service request is configured to request to establish a protocol data unit (PDU) session for a multimodal service.

In an embodiment, the third reception module 210 includes one of:
a third receiving sub-module 211, configured to receive Nsmf_PDUSession_CreateSMContext Request signaling carrying the multimodal service identifier information;
a fourth receiving sub-module 212, configured to receive Nsmf_PDUSession_UpdateSMContext Request signaling carrying the multimodal service identifier information.

In an embodiment, the apparatus 200 further includes:
a third sending module 220, configured to send a context service response carrying the multimodal service identifier information to the AMF, in response to agreeing to establish the PDU session; or
a fourth sending module 230, configured to send a PDU session rejection instruction carrying the multimodal service identifier information to the AMF, in response to disagreeing to establish the PDU session.

In an embodiment, the third sending module 220 includes one of:
a fourth sending sub-module 221, configured to send Nsmf_PDUSession_CreateSMContext Response signaling carrying the multimodal service identifier information to the AMF; or
a fifth sending sub-module 223, configured to send Nsmf_PDUSession_UpdateSMContext Response signaling carrying the multimodal service identifier information to the AMF.

In an embodiment, the fourth sending module 230 includes:
a sixth sending sub-module 231, configured to send PDU session reject signaling carrying the multimodal service identifier information to the AMF.

In an embodiment, the apparatus 200 further includes:
a second selection module 240, configured to select a user plane function (UPF) associated with the multimodal service, in response to agreeing to establish the PDU session.

In an embodiment, the apparatus 200 further includes:
a fifth sending module 250, configured to send session management information of the PDU session to the AMF, in response to successfully establishing the PDU session.

In an embodiment, the fifth sending module 250 includes:
a seventh sending sub-module 251, configured to send Namf_Communication_N1N2MessageTransfer signaling carrying the session management information of the PDU session to the AMF.

In an embodiment, different types of multimodal services correspond to different multimodal service identifier information.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

Embodiments of the present application provides an apparatus for information transmission, applicable for a user equipment (UE) of a core network. FIG. 7 is a block diagram illustrating an apparatus 300 for information transmission according to an embodiment of the present disclosure. As illustrated in FIG. 7, the apparatus 300 includes a sixth sending module 310.

The sixth sending module 310 is configured to send a protocol data unit (PDU) session establishment request for a multimodal service to an access and mobility management function (AMF), in which the PDU session establishment request carries multimodal service identifier information.

In an embodiment, the sixth sending module 310 includes:
an eighth sending sub-module 311, configurated to send PDU Session establishment request signaling carrying the multimodal service identifier information.

In an embodiment, the apparatus 300 further includes:
a fourth reception module 320, configured to receive session management information of the PDU session sent by an access network; and
a session module 330, configured to perform the PDU session based on the session management information.

In an embodiment, the fourth reception module 320 includes:
a fifth reception sub-module 321, configured to receive RRC Connection Reconfiguration signaling carrying the session management information of the PDU session sent by the access network.

In an embodiment, different types of multimodal services correspond to different multimodal service identifier information.

In an embodiment, the multimodal service identifier information includes at least one of:
name information corresponding to the type of the multimodal service;
identifier information corresponding to the type of the multimodal service;
enumeration value information corresponding to the type of the multimodal service;
character information or string information corresponding to the type of the multimodal service.

In an embodiment, a correspondence relationship between types of multimodal services and multimodal service identifier information is configured by the core network or pre-negotiated.

In an embodiment, the apparatus 300 further includes:
a fifth reception module 340, configured to receive indication information of a correspondence relationship between types of multimodal services and multimodal service identifier information, in which the indication information is broadcast by a base station.

In an illustrative embodiment, the first reception module 110, the first selection module 120, the first sending module 130, the first determination module 140, the second determination module 150, the second reception module 160, the second sending module 170, the third reception module 210, the third sending module 220, the fourth sending module 230, the second selection module 240, the fifth sending module 250, the sixth sending module 310, the fourth reception module 320, the session module 330 and the fifth reception module 340 may be implemented by one or more central processing units (CPUs), graphics processing units (GPUs), baseband processors (BPs), application specific integrated circuits (ASICs), DSPs, programmable logic devices (PLDs) complex programmable logic devices (CPLDs), field programmable gate array (FPGAs), general processors, controllers, micro controller units (MCUs), microprocessors, or other electronic elements, may also be implemented in combination with one or more RF (radio frequency) antennas, to perform the above methods.

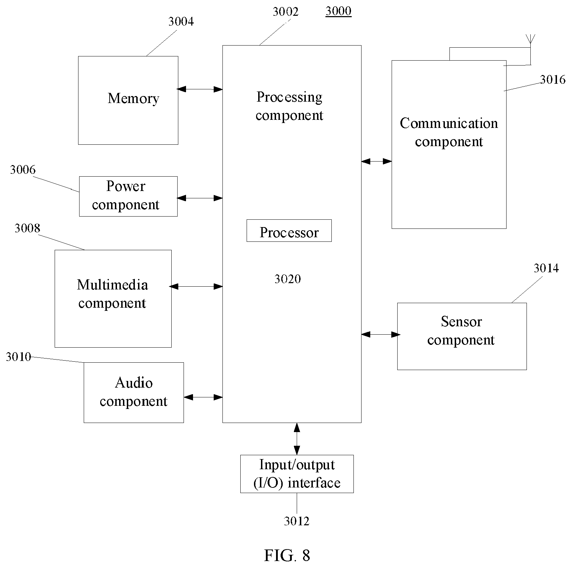

FIG. 8 is a block diagram illustrating an apparatus 3000 configured for information transmission according to an illustrative embodiment. For example, the apparatus 3000 may be a mobile phone, a computer, a digital broadcasting terminal, a message transceiving equipment, a game console, a tablet equipment, a medical equipment, a fitness equipment, or a personal digital assistant.

As illustrated in FIG. 8, the apparatus 3000 may include one or more of: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the user equipment 3000, such as the operations associated with display, telephone calls, data communications, camera operations, and recording operations. The processing component 3002 may include one or more processors 3020 for executing instructions to implement all or a part of the above method. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the apparatus 3000. Examples of such data include instructions for any application or method operated on the apparatus 3000 for performing contraction data, phonebook data, messages, pictures, video, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The communication component 3016 is configured to facilitate communication, wired or wirelessly, between the apparatus 3000 and other devices. The apparatus 3000 may access a wireless network based on a communication standard, such as Wi-Fi, 2G, 3G, or a combination thereof. In an embodiment, the communication component 3016 receives a broadcast signal or broadcast associated information from an external broadcast management system via a broadcast channel. In an embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more embodiments, the apparatus 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an embodiment, there is also provided a non-transitory computer readable storage medium including instructions, such as the memory 3004 including the instructions. The instructions may be executed by the processor 3020 in the apparatus 3000 for performing the above method. For example, the non-transitory computer readable storage medium may be a ROM, a RAM, a CD-ROM, a magnetic tape, a floppy disc, an optical data storage device, and the like.

Other implementations of the disclosure will be apparent to the skilled in the art from consideration of the specification and practice of the disclosure disclosed here. This disclosure is intended to cover any variations, uses, or adaptations of the disclosure following the general principles thereof and including such departures from the disclosure as come within known or customary practice in the art. In addition, for those ordinary skilled in the art, combinations or replacements may be made on the steps or modules disclosed in embodiments of the disclosure without departing from the principle thereof.

It should be understood that the disclosure is not limited to the exaction construction that has been described above and illustrated in the accompanying drawings, and that various modifications and changes may be made without departing from the scope thereof. The scope of the disclosure is limited by the appended claims.

## Claims

1. A method for information transmission, the method comprising:
receiving (101), by an access and mobility management function, AMF, of a core network, a protocol data unit, PDU, session establishment request sent by a user equipment, UE, for a multimodal service, wherein the PDU session establishment request carries multimodal service identifier information, the multimodal service distinguishes different modalities based on different sources or forms of data;
the method further comprising:
selecting, by the AMF, a session management function, SMF, associated with the multimodal service in response to receiving the PDU session establishment request; and
sending (102), by the AMF, a context service request carrying the multimodal service identifier information to the selected SMF.

2. The method according to claim 1, wherein receiving (101) the PDU session establishment request sent by the UE for the multimodal service comprises:
receiving PDU session establishment request signaling carrying the multimodal service identifier information sent by the UE.

3. The method according to claim 1 or 2, wherein sending the context service request carrying the multimodal service identifier information to the selected SMF comprises one of:
sending Nsmf_PDUSession_CreateSMContext Request signaling carrying the multimodal service identifier information to the selected SMF; or
sending Nsmf_PDUSession_UpdateSMContext Request signaling carrying the multimodal service identifier information to the selected SMF.

4. The method according to claim 3, further comprising one of:
determining, by the AMF, that the selected SMF agrees to establish a PDU session in response to receiving a context service response carrying the multimodal service identifier information sent by the selected SMF; or
determining, by the AMF, that the selected SMF disagrees to establish a PDU session, in response to receiving a PDU session rejection instruction carrying the multimodal service identifier information sent by the selected SMF;
optionally, determining that the selected SMF agrees to establish the PDU session, in response to receiving the context service response carrying the multimodal service identifier information sent by the selected SMF comprises one of:
determining that the selected SMF agrees to establish the PDU session, in response to receiving Nsmf_PDUSession_CreateSMContext Response signaling carrying the multimodal service identifier information sent by the selected SMF; or
determining that the selected SMF agrees to establish the PDU session, in response to receiving Nsmf_PDUSession_UpdateSMContext Response signaling carrying the multimodal service identifier information sent by the selected SMF;
optionally, determining that the selected SMF disagrees to establish the PDU session, in response to receiving the PDU session rejection instruction carrying the multimodal service identifier information sent by the selected SMF comprises:
determining that the selected SMF disagrees to establish the PDU session, in response to receiving PDU session reject signaling carrying the multimodal service identifier information sent by the selected SMF.

5. The method according to claim 3 or 4, further comprising:
receiving, by the AMF, session management information of the PDU session, wherein the session management information is sent by the selected SMF in response to successfully establishing the PDU session;
optionally, receiving the session management information of the PDU session sent by the selected SMF in response to successfully establishing the PDU session comprises:
receiving Namf_Communication_N1N2MessageTransfer signaling carrying the session management information of the PDU session sent by the selected SMF.

6. The method according to claim 5, further comprising:
sending, by the AMF, the session management information of the PDU session to an access network, in response to receiving the session management information of the PDU session; wherein, the access network sends the session management information of the PDU session to the UE;
optionally, sending the session management information of the PDU session to the access network in response to receiving the session management information of the PDU session comprises:
sending N2 PDU Session Request signaling carrying the session management information of the PDU session to the access network;
and wherein the access network sends the session management information of the PDU session to the UE by carrying the session management information of the PDU session in RRC Connection Reconfiguration signaling.

7. A method for information transmission, the method comprising:
receiving (301), by a session management function, SMF, of a core network, a context service request carrying multimodal service identifier information sent by an access and mobility management function, AMF, of the core network, wherein the context service request is configured to request to establish a protocol data unit, PDU, session for a multimodal service, the multimodal service distinguishes different modalities based on different sources or forms of data;
wherein the SMF is an SMF associated with the multimodal service selected by the AMF in response to the AMF receiving a PDU session establishment request, and the PDU session establishment request carries multimodal service identifier information.

8. The method according to claim 7, wherein receiving (301) the context service request carrying the multimodal service identifier information sent by the AMF comprises one of:
receiving Nsmf_PDUSession_CreateSMContext Request signaling carrying the multimodal service identifier information; or
receiving Nsmf_PDUSession_UpdateSMContext Request signaling carrying the multimodal service identifier information.

9. The method according to claim 7 or 8, further comprising:
sending, by the SMF, a context service response carrying the multimodal service identifier information to the AMF, in response to agreeing to establish the PDU session; or
sending, by the SMF, a PDU session rejection instruction carrying the multimodal service identifier information to the AMF, in response to disagreeing to establish the PDU session;
optionally, sending to the AMF the context service response carrying the multimodal service identifier information comprises one of:
sending Nsmf_PDUSession_CreateSMContext Response signaling carrying the multimodal service identifier information to the AMF; or
sending Nsmf_PDUSession_UpdateSMContext Response signaling carrying the multimodal service identifier information to the AMF;
optionally, sending the PDU session rejection instruction carrying the multimodal service identifier information to the AMF comprises:
sending PDU session reject signaling carrying the multimodal service identifier information to the AMF.

10. The method according to any one of claims 7-9, further comprising:
selecting, by the SMF, a user plane function, UPF, associated with the multimodal service, in response to agreeing to establish the PDU session; or
sending, by the SMF, session management information of the PDU session to the AMF, in response to successfully establishing the PDU session;
optionally, sending the session management information of the PDU session to the AMF comprises:
sending Namf_Communication_N1N2MessageTransfer signaling carrying the session management information of the PDU session to the AMF.

11. A method for information transmission, the method comprising:
sending (401), by a user equipment, UE, a protocol data unit, PDU, session establishment request for a multimodal service to an access and mobility management function, AMF, causing the AMF selecting a session management function, SMF, associated with the multimodal service in response to the AMF receiving a PDU session establishment request, and sending a context service request carrying the multimodal service identifier information to the selected SMF, wherein the PDU session establishment request carries multimodal service identifier information, the multimodal service distinguishes different modalities based on different sources or forms of data.

12. The method according to claim 11, wherein sending (401) the PDU session establishment request for the multimodal service to the AMF comprises:
sending PDU Session establishment request signaling carrying the multimodal service identifier information.

13. The method according to claim 11 or 12, further comprising:
receiving, by the UE, session management information of the PDU session sent by an access network, and performing the PDU session based on the session management information;
optionally, receiving the session management information of the PDU session sent by the access network comprises:
receiving RRC Connection Reconfiguration signaling carrying the session management information of the PDU session sent by the access network.

14. The method according to any one of claims 11 to 13, further comprising:
receiving, by the UE, indication information of a correspondence relationship between types of multimodal services and multimodal service identifier information, wherein the indication information is broadcast by a base station.

15. A communication device, comprising a processor, a transceiver, a memory and an executable program stored on the memory and capable of being run by the processor; wherein the processor is configured to implement steps of the method for information transmission according to any one of claims 1 to 6, or steps of the method for information transmission according to any one of claims 7 to 10, or steps of the method for information transmission according to any one of claims 11 to 14 when running the executable program.

## Patentansprüche

1. Verfahren zur Informationsübertragung, wobei das Verfahren umfasst:
Empfangen (101), mittels einer Zugangs- und Mobilitätsmanagementfunktion, AMF, eines Kernnetzes einer von einem Benutzergerät, UE, gesendeten Protokolldateneinheit-, PDU, Sitzungsaufbauanforderung für einen multimodalen Dienst, wobei die PDU-Sitzungsaufbauanforderung Informationen zur Kennung eines multimodalen Dienstes trägt, wobei der multimodale Dienst verschiedene Modalitäten auf der Grundlage unterschiedlicher Datenquellen oder -formen unterscheidet;
wobei das Verfahren ferner umfasst:
Auswählen, mittels der AMF, einer Sitzungsverwaltungsfunktion, SMF, die dem multimodalen Dienst zugeordnet ist, als Reaktion auf das Empfangen der PDU-Sitzungsaufbauanforderung; und
Senden (102), mittels der AMF, einer Kontextdienstanforderung, welche die Informationen zur Kennung eines multimodalen Dienstes trägt, an die ausgewählte SMF.

2. Verfahren nach Anspruch 1, wobei das Empfangen (101) der vom UE für den multimodalen Dienst gesendeten PDU-Sitzungsaufbauanforderung umfasst:
Empfangen einer PDU-Sitzungsaufbauanforderung-Signalisierung, welche die vom UE gesendeten Informationen zur Kennung eines multimodalen Dienstes trägt.

3. Verfahren nach Anspruch 1 oder 2, wobei das Senden der Kontextdienstanforderung, welche die Informationen zur Kennung eines multimodalen Dienstes trägt, an die ausgewählte SMF eines aus Folgendem umfasst:
Senden einer Signalisierung Nsmf_PDUSession_CreateSMContext Request, welche die Informationen zur Kennung eines multimodalen Dienstes trägt, an die ausgewählte SMF; oder
Senden einer Signalisierung Nsmf_PDUSession_UpdateSMContext Request, welche die Informationen zur Kennung eines multimodalen Dienstes trägt, an die ausgewählte SMF.

4. Verfahren nach Anspruch 3, das ferner eines aus Folgendem umfasst:
Bestimmen, mittels der AMF, dass die ausgewählte SMF zustimmt, eine PDU-Sitzung als Reaktion auf das Empfangen einer Kontextdienstanforderung aufzubauen, welche die von der ausgewählten SMF gesendeten Informationen zur Kennung eines multimodalen Dienstes trägt; oder
Bestimmen, mittels der AMF, dass die ausgewählte SMF nicht zustimmt, eine PDU-Sitzung als Reaktion auf das Empfangen einer PDU-Sitzungsablehnungsanweisung aufzubauen, welche die von der ausgewählten SMF gesendeten Informationen zur Kennung eines multimodalen Dienstes trägt; oder
wobei das Bestimmen, dass die ausgewählte SMF zustimmt, die PDU-Sitzung als Reaktion auf das Empfangen einer Kontextdienstanforderung aufzubauen, welche die von der ausgewählten SMF gesendeten Informationen zur Kennung eines multimodalen Dienstes trägt, optional eines aus Folgendem umfasst:
Bestimmen, dass die ausgewählte SMF zustimmt, die PDU-Sitzung als Reaktion auf das Empfangen einer Signalisierung Nsmf_PDUSession_CreateSMContext Response aufzubauen, welche die von der ausgewählten SMF gesendeten Informationen zur Kennung eines multimodalen Dienstes trägt; oder
Bestimmen, dass die ausgewählte SMF zustimmt, die PDU-Sitzung als Reaktion auf das Empfangen einer Signalisierung Nsmf_PDUSession_UpdateSMContext Response aufzubauen, welche die von der ausgewählten SMF gesendeten Informationen zur Kennung eines multimodalen Dienstes trägt;
wobei das Bestimmen, dass die ausgewählte SMF nicht zustimmt, die PDU-Sitzung als Reaktion auf das Empfangen einer Sitzungsablehnungsanweisung aufzubauen, welche die von der ausgewählten SMF gesendeten Informationen zur Kennung eines multimodalen Dienstes trägt, optional umfasst:
Bestimmen, dass die ausgewählte SMF nicht zustimmt, die PDU-Sitzung als Reaktion auf das Empfangen einer PDU-Sitzungsablehnungssignalisierung aufzubauen, welche die von der ausgewählten SMF gesendeten Informationen zur Kennung eines multimodalen Dienstes trägt.

5. Verfahren nach Anspruch 3 oder 4, das ferner umfasst:
Empfangen, mittels der AMF, von Sitzungsverwaltungsinformationen der PDU-Sitzung, wobei die Sitzungsverwaltungsinformationen von der ausgewählten SMF als Reaktion auf den erfolgreichen Aufbau der PDU-Sitzung gesendet werden;
wobei das Empfangen der Sitzungsverwaltungsinformationen der PDU-Sitzung, die von der ausgewählten SMF als Reaktion auf den erfolgreichen Aufbau der PDU-Sitzung gesendet werden, umfasst:
Empfangen einer Signalisierung Namf_Communication_N1N2MessageTransfer, welche die von der ausgewählten SMF gesendeten Sitzungsverwaltungsinformationen der PDU-Sitzung trägt.

6. Verfahren nach Anspruch 5, das ferner umfasst:
Senden, mittels der AMF, der Sitzungsverwaltungsinformationen der PDU-Sitzung an ein Zugangsnetz als Reaktion auf das Empfangen der Sitzungsverwaltungsinformationen der PDU-Sitzung; wobei das Zugangsnetz die Sitzungsverwaltungsinformationen der PDU-Sitzung an das UE sendet;
wobei das Senden der Sitzungsverwaltungsinformationen der PDU-Sitzung an das Zugangsnetz als Reaktion auf das Empfangen der Sitzungsverwaltungsinformationen der PDU-Sitzung optional umfasst:
Senden einer Signalisierung N2 PDU Session Request, welche die Sitzungsverwaltungsinformationen der PDU-Sitzung trägt, an das Zugangsnetz;
und wobei das Zugangsnetz die Sitzungsverwaltungsinformationen der PDU-Sitzung an das UE sendet, indem es die Sitzungsverwaltungsinformationen der PDU-Sitzung in der RRC-Connection-Reconfiguration-Signalisierung trägt.

7. Verfahren zur Informationsübertragung, wobei das Verfahren umfasst:
Empfangen (301), mittels einer Sitzungsverwaltungsfunktion, SMF, eines Kernnetzes einer Kontextdienstanforderung, die Informationen zur Kennung eines multimodalen Dienstes trägt, die von einer Zugangs- und Mobilitätsmanagementfunktion, AMF, des Kernnetzes gesendet werden; wobei die Kontextdienstanforderung so ausgelegt ist, dass sie den Aufbau einer Sitzung einer Protokolldateneinheit, PDU, für einen multimodalen Dienst anfordert, wobei der multimodale Dienst verschiedene Modalitäten auf der Grundlage unterschiedlicher Datenquellen oder -formen unterscheidet;
wobei die SMF eine SMF ist, die dem multimodalen Dienst zugeordnet ist, der von der AMF als Reaktion darauf ausgewählt wird, dass die AMF eine PDU-Sitzungsaufbauanforderung empfängt, und die PDU-Sitzungsaufbauanforderung Informationen zur Kennung eines multimodalen Dienstes trägt.

8. Verfahren nach Anspruch 7, wobei das Empfangen (301) der Kontextdienstanforderung, welche die von der AMF gesendeten Informationen zur Kennung eines multimodalen Dienstes trägt, eines aus Folgendem umfasst:
Empfangen einer Signalisierung Nsmf_PDUSession_CreateSMContext Request, welche die Informationen zur Kennung eines multimodalen Dienstes trägt; oder
Empfangen einer Signalisierung Nsmf_PDUSession_UpdateSMContext Request, welche die Informationen zur Kennung eines multimodalen Dienstes trägt.

9. Verfahren nach Anspruch 7 oder 8, das ferner umfasst:
Senden, mittels der SMF, einer Kontextdienstantwort, welche die Informationen zur Kennung eines multimodalen Dienstes trägt, als Reaktion auf die Zustimmung zum Aufbau der PDU-Sitzung; oder
Senden, mittels der SMF, einer PDU-Sitzungsablehnungsanweisung, welche die Informationen zur Kennung eines multimodalen Dienstes trägt, an die AMF als Reaktion auf die Nichtzustimmung zum Aufbau der PDU-Sitzung; oder
das Senden der Kontextdienstantwort, welche die Informationen zur Kennung eines multimodalen Dienstes trägt, an die AMF optional eines aus Folgendem umfasst:
Senden einer Signalisierung Nsmf_PDUSession_CreateSMContext Response, welche die Informationen zur Kennung eines multimodalen Dienstes trägt, an die AMF.
Senden einer Signalisierung Nsmf_PDUSession_UpdateSMContext Response, welche die Informationen zur Kennung eines multimodalen Dienstes trägt, an die AMF;
wobei das Senden der PDU-Sitzungsablehnungsanweisung, welche die Informationen zur Kennung eines multimodalen Dienstes trägt, an die AMF optional umfasst:
Senden einer PDU-Sitzungsablehnungssignalisierung, welche die Informationen zur Kennung eines multimodalen Dienstes trägt, an die AMF.

10. Verfahren nach einem der Ansprüche 7-9, das ferner umfasst:
Auswählen, mittels der SMF, einer dem multimodalen Dienst zugeordneten U-ser-Plane-Funktion, UPF, als Reaktion auf die Zustimmung zum Aufbau der PDU-Sitzung; oder
Senden, mittels der SMF, von Sitzungsverwaltungsinformationen der PDU-Sitzung an die AMF als Reaktion auf den erfolgreichen Aufbau der PDU-Sitzung;
wobei das Senden der Sitzungsverwaltungsinformationen der PDU-Sitzung an die AMF optional umfasst:
Senden einer Signalisierung Namf_Communication_N1N2MessageTransfer, welche die Sitzungsverwaltungsinformationen der PDU-Sitzung trägt, an die AMF.

11. Verfahren zur Informationsübertragung, wobei das Verfahren umfasst:
Senden (401), mittels eines Benutzergeräts, UE, einer Protokolldateneinheit-, PDU, Sitzungsaufbauanforderung für einen multimodalen Dienst an eine Zugangs- und Mobilitätsmanagementfunktion, AMF, wodurch die AMF als Reaktion auf das Empfangen einer PDU-Sitzungsaufbauanforderung durch die AMF eine dem multimodalen Dienst zugeordnete Sitzungsverwaltungsfunktion, SMF, auswählt und eine Kontextdienstanforderung, welche die Informationen zur Kennung eines multimodalen Dienstes trägt, an die ausgewählte SMF sendet, wobei die PDU-Sitzungsaufbauanforderung Informationen zur Kennung eines multimodalen Dienstes trägt, wobei der multimodale Dienst verschiedene Modalitäten auf der Grundlage unterschiedlicher Datenquellen oder -formen unterscheidet.

12. Verfahren nach Anspruch 11, wobei das Senden (401) der PDU-Sitzungsaufbauanforderung für den multimodalen Dienst an die AMF umfasst:
Senden einer PDU-Sitzungsaufbauanforderung-Signalisierung, welche die Informationen zur Kennung eines multimodalen Dienstes trägt.

13. Verfahren nach Anspruch 11 oder 12, das ferner umfasst:
Empfangen, mittels des UE, von Sitzungsverwaltungsinformationen der PDU-Sitzung, die von einem Zugangsnetz gesendet werden, und Durchführen der PDU-Sitzung auf der Grundlage dieser Sitzungsverwaltungsinformationen;
wobei das Empfangen der von dem Zugangsnetz gesendeten Sitzungsverwaltungsinformationen der PDU-Sitzung optional umfasst:
Empfangen einer RRC-Connection-Reconfiguration-Signalisierung, welche die von dem Zugangsnetz gesendeten Sitzungsverwaltungsinformationen der PDU-Sitzung trägt.

14. Verfahren nach einem der Ansprüche 11 bis 13, das ferner umfasst:
Empfangen, mittels des UE, von Angabeinformationen einer Korrespondenzbeziehung zwischen Typen von multimodalen Diensten und Informationen zur Kennung eines multimodalen Dienstes, wobei die Angabeinformationen von einer Basisstation gesendet werden.

15. Kommunikationsvorrichtung, die einen Prozessor, einen Transceiver, einen Speicher und ein ausführbares Programm aufweist, das auf dem Speicher gespeichert ist und von dem Prozessor ausgeführt wird; wobei der Prozessor so ausgebildet ist, dass er beim Ausführen des ausführbaren Programms Schritte des Verfahrens zur Informationsübertragung nach einem der Ansprüche 1 bis 6 oder Schritte des Verfahrens zur Informationsübertragung nach einem der Ansprüche 7 bis 10 oder Schritte des Verfahrens zur Informationsübertragung nach einem der Ansprüche 11 bis 14 ausführt.

## Revendications

1. Procédé de transmission d'informations, le procédé comprenant l'étape consistant à :
recevoir (101), par une fonction de gestion d'accès et de mobilité, dite AMF, d'un réseau central, une demande d'établissement de session d'unité de données de protocole, dite PDU, envoyée par un équipement d'utilisateur, dit UE, concernant un service multimodal, dans lequel la demande d'établissement de session de PDU véhicule des informations d'identifiant de service multimodal, le service multimodal différencie différentes modalités sur la base de différentes sources ou formes de données ;
le procédé comprenant en outre les étapes consistant à :
sélectionner, par l'AMF, une fonction de gestion de session, dite SMF, associée au service multimodal en réponse à la réception de la demande d'établissement de session de PDU ; et
envoyer (102), par l'AMF, une demande de service de contexte véhiculant les informations d'identifiant de service multimodal à la SMF sélectionnée.

2. Procédé selon la revendication 1, dans lequel l'étape de réception (101) de la demande d'établissement de session de PDU envoyée par l'UE concernant le service multimodal consiste à :
recevoir une signalisation de demande d'établissement de session de PDU véhiculant les informations d'identifiant de service multimodal envoyée par l'UE.

3. Procédé selon la revendication 1 ou la revendication 2, dans lequel l'étape d'envoi de la demande de service de contexte véhiculant les informations d'identifiant de service multimodal à la SMF sélectionnée consiste à soit :
envoyer une signalisation Nsmf_PDUSession_CreateSMContext Request véhiculant les informations d'identifiant de service multimodal à la SMF sélectionnée ; soit
envoyer une signalisation Nsmf_PDUSession_UpdateSMContext Request véhiculant les informations d'identifiant de service multimodal à la SMF sélectionnée.

4. Procédé selon la revendication 3, comprenant en outre l'une des étapes consistant à :
déterminer, par l'AMF, que la SMF sélectionnée accepte d'établir une session de PDU en réponse à la réception d'une réponse de service de contexte véhiculant les informations d'identifiant de service multimodal envoyée par la SMF sélectionnée ; ou
déterminer, par l'AMF, que la SMF sélectionnée refuse d'établir une session de PDU, en réponse à la réception d'une instruction de rejet de session de PDU véhiculant les informations d'identifiant de service multimodal envoyée par la SMF sélectionnée ;
éventuellement, l'étape de détermination du fait que la SMF sélectionnée accepte d'établir la session de PDU, en réponse à la réception de la réponse de service de contexte véhiculant les informations d'identifiant de service multimodal envoyée par la SMF sélectionnée consiste à soit :
déterminer que la SMF sélectionnée accepte d'établir la session de PDU, en réponse à la réception d'une signalisation Nsmf_PDUSession_CreateSMContext Response véhiculant les informations d'identifiant de service multimodal envoyée par la SMF sélectionnée ; soit
déterminer que la SMF sélectionnée accepte d'établir la session de PDU, en réponse à la réception d'une signalisation Nsmf_PDUSession_UpdateSMContext Response véhiculant les informations d'identifiant de service multimodal envoyée par la SMF sélectionnée ;
éventuellement, l'étape de détermination du fait que la SMF sélectionnée refuse d'établir la session de PDU, en réponse à la réception d'une instruction de rejet de session de PDU véhiculant les informations d'identifiant de service multimodal envoyée par la SMF sélectionnée consiste à :
déterminer que la SMF sélectionnée refuse d'établir la session de PDU, en réponse à la réception d'une signalisation de rejet de session de PDU véhiculant les informations d'identifiant de service multimodal envoyée par la SMF sélectionnée.

5. Procédé selon la revendication 3 ou la revendication 4, comprenant en outre l'étape consistant à :
recevoir, par l'AMF, des informations de gestion de session de la session de PDU, dans lequel les informations de gestion de session sont envoyées par la SMF sélectionnée en réponse à un établissement réussi de la session de PDU ;
éventuellement, l'étape de réception des informations de gestion de session de la session de PDU envoyées par la SMF sélectionnée en réponse à un établissement réussi de la session de PDU consiste à :
recevoir une signalisation Namf_Communication_N1N2MessageTransfer véhiculant les informations de gestion de session de la session de PDU envoyée par la SMF sélectionnée.

6. Procédé selon la revendication 5, comprenant en outre l'étape consistant à :
envoyer, par l'AMF, les informations de gestion de session de la session de PDU à un réseau d'accès, en réponse à la réception des informations de gestion de session de la session de PDU ; dans lequel le réseau d'accès envoie les informations de gestion de session de la session de PDU à l'UE ;
éventuellement, l'étape d'envoi des informations de gestion de session de la session de PDU au réseau d'accès en réponse à la réception des informations de gestion de session de la session de PDU consiste à :
envoyer une signalisation N2 PDU Session Request véhiculant les informations de gestion de session de la session de PDU au réseau d'accès ;
et dans lequel, le réseau d'accès envoie les informations de gestion de session de la session de PDU à l'UE en véhiculant les informations de gestion de session de la session de PDU dans une signalisation de reconfiguration de connexion RRC.

7. Procédé de transmission d'informations, le procédé comprenant l'étape consistant à :
recevoir (301), par une fonction de gestion de session, dite SMF, d'un réseau central, une demande de service de contexte véhiculant des informations d'identifiant de service multimodal envoyée par une fonction de gestion d'accès et de mobilité, dite AMF, du réseau central, dans lequel la demande de service de contexte est configurée pour demander d'établir une session d'unité de données de protocole, dite PDU, concernant un service multimodal, le service multimodal différencie différentes modalités sur la base de différentes sources ou formes de données ;
dans lequel la SMF est une SMF associée au service multimodal sélectionné par l'AMF en réponse au fait que l'AMF reçoit une demande d'établissement de session de PDU, et la demande d'établissement de session de PDU véhicule des informations d'identifiant de service multimodal.

8. Procédé selon la revendication 7, dans lequel l'étape de réception (301) de la demande de service de contexte véhiculant les informations d'identifiant de service multimodal envoyée par l'AMF consiste à soit :
recevoir une signalisation Nsmf_PDUSession_CreateSMContext Request véhiculant les informations d'identifiant de service multimodal ; soit
recevoir une signalisation Nsmf_PDUSession_UpdateSMContext Request véhiculant les informations d'identifiant de service multimodal.

9. Procédé selon la revendication 7 ou la revendication 8, comprenant en outre l'étape consistant à :
envoyer, par la SMF, une réponse de service de contexte véhiculant les informations d'identifiant de service multimodal à l'AMF, en réponse à l'acceptation d'établissement de la session de PDU ; ou
envoyer, par la SMF, une instruction de rejet de session de PDU véhiculant les informations d'identifiant de service multimodal à l'AMF, en réponse au refus d'établissement de la session de PDU ;
éventuellement, l'étape d'envoi, à l'AMF, de la réponse de service de contexte véhiculant les informations d'identifiant de service multimodal consiste à soit :
envoyer une signalisation Nsmf_PDUSession_CreateSMContext Response véhiculant les informations d'identifiant de service multimodal à l'AMF ; soit
envoyer une signalisation Nsmf_PDUSession_UpdateSMContext Response véhiculant les informations d'identifiant de service multimodal à l'AMF ;
éventuellement, l'étape d'envoi de l'instruction de rejet de session de PDU véhiculant les informations d'identifiant de service multimodal à l'AMF consiste à :
envoyer une signalisation de rejet de session de PDU véhiculant les informations d'identifiant de service multimodal à l'AMF.

10. Procédé selon l'une quelconque des revendications 7 à 9, comprenant en outre les étapes consistant à :
sélectionner, par la SMF, une fonction de plan d'utilisateur, dite UPF, associée au service multimodal, en réponse à l'acceptation d'établissement de la session de PDU ; ou
envoyer, par la SMF, des informations de gestion de session de la session de PDU à l'AMF, en réponse à l'établissement réussi de la session de PDU ;
éventuellement, l'étape d'envoi des informations de gestion de session de la session de PDU à l'AMF consiste à :
envoyer une signalisation Namf_Communication_N1N2MessageTransfer véhiculant les informations de gestion de session de la session de PDU à l'AMF.

11. Procédé de transmission d'informations, le procédé comprenant l'étape consistant à :
envoyer (401), par un équipement d'utilisateur, dit UE, une demande d'établissement de session d'unité de données de protocole, dite PDU, concernant un service multimodal à une fonction de gestion d'accès et de mobilité, dite AMF, amenant l'AMF à sélectionner une fonction de gestion de session, dite SMF, associée au service multimodal en réponse au fait que l'AMF reçoit une demande d'établissement de session de PDU, et à envoyer une demande de service de contexte véhiculant les informations d'identifiant de service multimodal à la SMF sélectionnée, dans lequel la demande d'établissement de session de PDU véhicule des informations d'identifiant de service multimodal, le service multimodal différencie différentes modalités sur la base de différentes sources ou formes de données.

12. Procédé selon la revendication 11, dans lequel l'étape d'envoi (401) de la demande d'établissement de session de PDU concernant le service multimodal à l'AMF consiste à :
envoyer une signalisation de demande d'établissement de session de PDU véhiculant les informations d'identifiant de service multimodal.

13. Procédé selon la revendication 11 ou la revendication 12, comprenant en outre l'étape consistant à :
recevoir, par l'UE, des informations de gestion de session de la session de PDU envoyées par un réseau d'accès, et mettre en œuvre la session de PDU sur la base des informations de gestion de session ;
éventuellement, l'étape de réception des informations de gestion de session de la session de PDU envoyées par le réseau d'accès consiste à :
recevoir une signalisation de reconfiguration de connexion RRC véhiculant les informations de gestion de session de la session de PDU envoyée par le réseau d'accès.

14. Procédé selon l'une quelconque des revendications 11 à 13, comprenant en outre l'étape consistant à :
recevoir, par l'UE, des informations d'indication d'une relation de correspondance entre des types de services multimodaux et des informations d'identifiant de service multimodal, dans lequel les informations d'indication sont diffusées par une station de base.

15. Dispositif de communication, comprenant un processeur, un émetteurrécepteur, une mémoire et un programme exécutable maintenu dans la mémoire et pouvant être exécuté par le processeur ; dans lequel le processeur est configuré, lorsqu'il exécute le programme exécutable, pour mettre en œuvre les étapes du procédé de transmission d'informations selon l'une quelconque des revendications 1 à 6, ou les étapes du procédé de transmission d'informations selon l'une quelconque des revendications 7 à 10, ou les étapes du procédé de transmission d'informations selon l'une quelconque des revendications 11 à 14.
